# EUROPEAN PATENT APPLICATION

(11) **EP 0 980 189 A2**
(43) Date of publication of application: **16.02.2000**
(21) Application number: 99115088.9
(22) Date of filing: 06.08.1999
(51) Int. Cl.: H04Q 3/00, H04Q 3/66

(54) **Method and apparatus for routing data traffic away from a failing switch**

(30) Priority: 12.08.1998 US 133117
(71) Applicant: AT&T Corp., New York, NY 10013-2412 (US)
(72) Inventor: DeCaluwe, Craig L., Naperville, Illinois 60565 (US); Guzman, Araceli, DeKalb, Illinois 60115 (US); Kohler, Joseph, Woodridge, Illinois 60517 (US)
(74) Representative: Modiano, Guido, Dr.-Ing.

(57) **Abstract**

A toll switching office, interconnected to other toll switching offices in a communications network, such as a digital TDM telecommunications, Internet, packet data, frame relay and like networks, maintains a via list of the status and availability of facilities. A toll switching office that experiences difficulty in handling communications traffic alerts the other toll switching offices to remove the troubled office from the respective via list maintained by each toll switching office and, where available, in a network management operating system or NEMOS database, so as to limit the traffic routed to the troubled switch to LEC or terminating traffic only, while routing any additional traffic around the troubled switch to prevent loss of traffic or overloading the facility.

## Description

### Technical Field

This invention relates generally to routing traffic in communications network, and more particularly, to a communications switching network which includes a mechanism for routing data traffic away from a failing switch within the network.

### Background of the Invention

Long distance digital communications networks include a number of various facilities including a plurality of toll switching offices. These toll switching offices are situated at various locales with each switching office connected through trunk lines to the other toll switching offices in the system. Additionally, each toll switching office is connected through trunk lines to a plurality of local exchange companies (LECs). These connections permit telecommunications traffic originating at one LEC to be transmitted to another LEC connected to the same or a different toll switching office.

Generally the toll switching offices include an electronic switch such as, for example, a 4ESS switch, available from Lucent Technologies, Inc. connected, for example, through digital trunk lines, for example, T1 trunk lines to the other switching offices and to the LECs served by that switch. Each toll switch is capable of monitoring the usage loading or traffic across the switch with the traffic information of that switch and the other switches in the network maintained in a database in each switch known as a via list.

The via list is both a status indicator of routes already taken between a source caller and a destination called party and an indicator of available routes which do not violate transmission degradation guidelines between a source and a dialed destination office. For example, there may exist several alternative available routes between a source toll switching office or intermediate toll switching office and a destination toll switching office for a call between them. A call, for example, from California to New York may be routed via intermediate toll switching centers in a direct, for example, satellite route, via a toll switching office near Chicago, or via a toll switching office in St. Louis, Missouri.

Each of the toll switching offices in the long distance digital communications network may also be connected to a network management operating system, hereinafter referred to as a NEMOS, which permits an operator to monitor the traffic flow across the system. The via list of each switch may be merged into a composite via list maintained in the NEMOS for all toll switching offices of a network. The NEMOS may utilize this composite via list to perform real time network monitoring of the network by keeping track of all traffic in every switch in the network. The NEMOS may also be utilized to control real time network routing (RTNR) of traffic across the network.

In transferring traffic across the network, a switch queries its via list to determine the traffic carrying capacity of the remaining switches in the network. The traffic is then routed to a switch selected generally for having the greatest spare traffic carrying capacity.

However, a switch's ability to handle traffic may be degraded, impairing its ability to handle traffic. Here and elsewhere in the present application, such a switch may be referred to as a "failing switch". This degradation may occur in a number of ways, including having a Time Division Multiplex (TDM) switch controller, down, impaired, or not dedicated, with a 4ESS toll switch where the calls are switched. This may result in loss of call completion, giving an indication on each via list maintained in the network switches that the switch is lightly loaded and able to receive additional traffic. When this condition occurs, traffic from other switch offices, based on the via lists, tend to be routed to the failing switch, resulting in further degradation in the call completion rate by overloading the office.

Consequently, networks may be fooled by indicators that the network is healthy and has excess call carrying capacity when it does not. There is thus a need in the art for an improved and more reliable method and apparatus for routing data traffic away from a failing switch in a communications network.

### Summary of the Invention

The inventive routing method of the present invention overcomes the foregoing problems and associated disadvantages of the method of operation of the existing network system. Each telecommunications facility, such as the above-described switching office, maintains a via list of the traffic flow and trunk loading for that facility. Each facility via list may also be merged into a composite via list maintained in memory of a network management operating system or NEMOS. The NEMOS composite via list thus provides the capability to monitor the traffic flow and trunk loading of each switching office in the network.

When a communications facility, such as a switching office, experiences difficulty in setting-up calls, it alerts every other facility connected to the facility having the problem to remove the troubled facility from the other facilities' via list so that the other facilities will not send further traffic to the troubled facility. Thus, one may avoid the possibility of overloading that facility through the normal routing methods of routing traffic to the apparently lightly loaded facility.

Alternatively, a NEMOS may be used to monitor the facilities forming the network in addition to each switch monitoring itself. At an indication of trouble tending to degrade the facility's ability to handle the traffic loading, the NEMOS sends a control message to all facilities linked to the network to remove the facility in trouble from their via list, rerouting traffic away from that facility.

Under manual control, the NEMOS also provides the capability to remove a facility from the via list based on external factors not sensed by the various facilities of the network.

Accordingly, it is a feature of the present invention to remove a telecommunications facility having trouble from the via lists of other facilities connected to the same network and prevent overloading the trunks of the facility in trouble with the resultant loss of call completion.

These and other features of the present invention will become clear from the following detailed description when taken in conjunction with the drawings.

### Brief Description of the Drawings

In The Drawings:
FIG. 1 illustrates a block diagram of a communications network 100 incorporating the present invention of a method and apparatus for routing data traffic away from a failing switch in network 100 which incorporates a network management operating system 200;
FIG. 2 illustrates a block diagram of an exemplary switch 110, 120, 130, or 140 as shown in FIG. 1; and
FIG. 3 is a flow diagram illustrating the steps of routing traffic around a failed switch in the network 100 of Fig. 1.

### Detailed Description

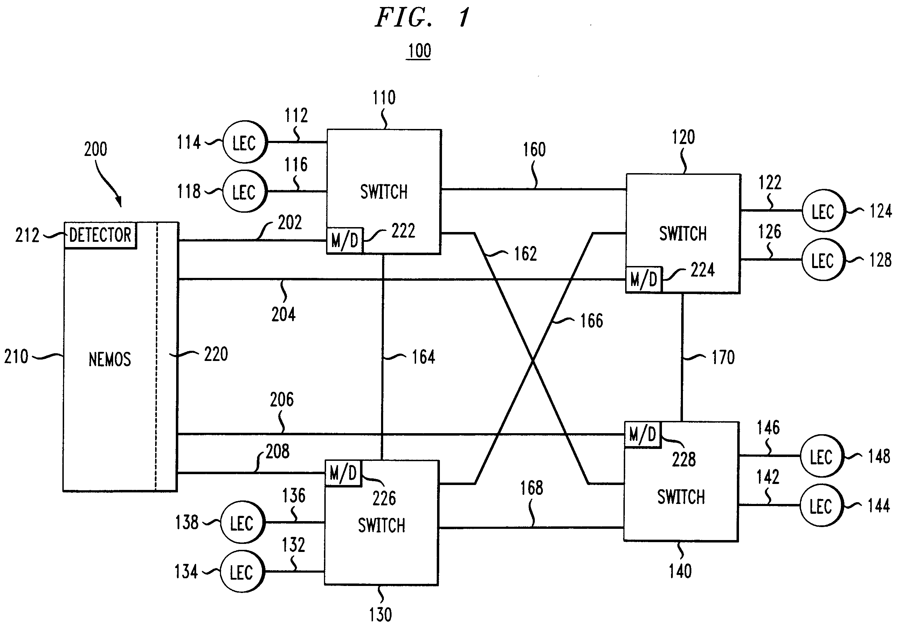

Referring now to Fig. 1, there is shown a long distance telecommunications network, generally at 100. By way of example and not by way of limitation, switch 110 through switch 140 of the network 100 are assumed to be 4ESS switches (electronic switching systems available from Lucent Technologies). It will be understood that other equipment such as a 5ESS switch or other toll switching equipment may be used depending on requirements of the network 100. Such a long distance telecommunication network may comprise a digital TDM network, a frame relay or first packet network, an Internet network or other long distance network. A digital TDM network is described by way of example.

Each 4ESS switch 110, 120, 130, 140, is coupled to the other 4ESS switches in the network 100, with 4ESS switch 110 coupled to 4ESS switches 120, 130, 140, over, for example, T1 or other trunk lines 160, 162, 164, respectively.

Further, each 4ESS switch 110, 120, 130, 140, is connected to a plurality of local exchange companies ( LECs), 114, 118, 124, 128, 134, 138, 144, 148, as shown, by way of example, with 4ESS switch 110, coupled over a T1 or other trunk line 112 to a LEC 114 bye line 116 to a LEC 118 and 4ESS switch 140, coupled over a T1 or other trunk line 142 to LEC 144.

It will be understood by those skilled in the art that the actual number of interconnected switches in the network 100 is a function of the network configuration. Also, the number of LECs coupled to a particular switch is a function of the switch configuration including the switching capacity of the switch.

Each 4ESS switch 110-140 maintains an internal database known as a via list which contains information relating to the load carrying and routing capability of each switch in the network 100. The via list is a database used in Real Time Network Routing (RTNR) for the network 100. It is a listing maintained internal to each 4ESS switch of the traffic loading capacity of the switch, that is, the ability of the switch to handle incoming and outgoing traffic, either from or to a LEC or another 4ESS switch. One example of providing the traffic loading ability of each switch is to provide categories of the availability of trunks such as:
- Lightly loaded 1: > 20% of the switch trunks are available for incoming traffic
- Lightly loaded 2: > 10% of the switch trunks are available for incoming traffic
- Lightly loaded 3: > 5% of the switch trunks are available for incoming traffic
- Heavy : < 5% of the switch trunks are available for incoming traffic
- Reserved Point : .2-3% of the switch trunks are available for incoming traffic- reserve for direct traffic only
- Busy : All trunks are busy, not available for incoming traffic

Each 4ESS switch, 110-140, may also be coupled to a network management operating system or NEMOS which maintains composite network 100 via list 220. The composite via list 220 includes the individual via lists maintained internally by each individual 4ESS switch 110-140. Additionally, each 4ESS switch 110-140 includes a failing switch monitor/detector 222, 224, 226, 228, respectively. Detectors 222-228 monitor the available load or traffic carrying capacity of its respective 4ESS switch.

When a predetermined loss of the traffic carrying capacity of a switch is reached, for example, the reserved point, the failing switch monitor of the affected switch initiates a procedure to communicate to the remaining switches to remove the affected switch from their respective via lists, so no additional traffic will be coupled through the affected switch. At the same time, the composite via list in the NEMOS is being continually updated with the traffic loading of each switch, including the affected switch.

Depending upon the traffic carrying capacity remaining available to the affected switch, originating or terminating traffic may be connected through the affected switch.

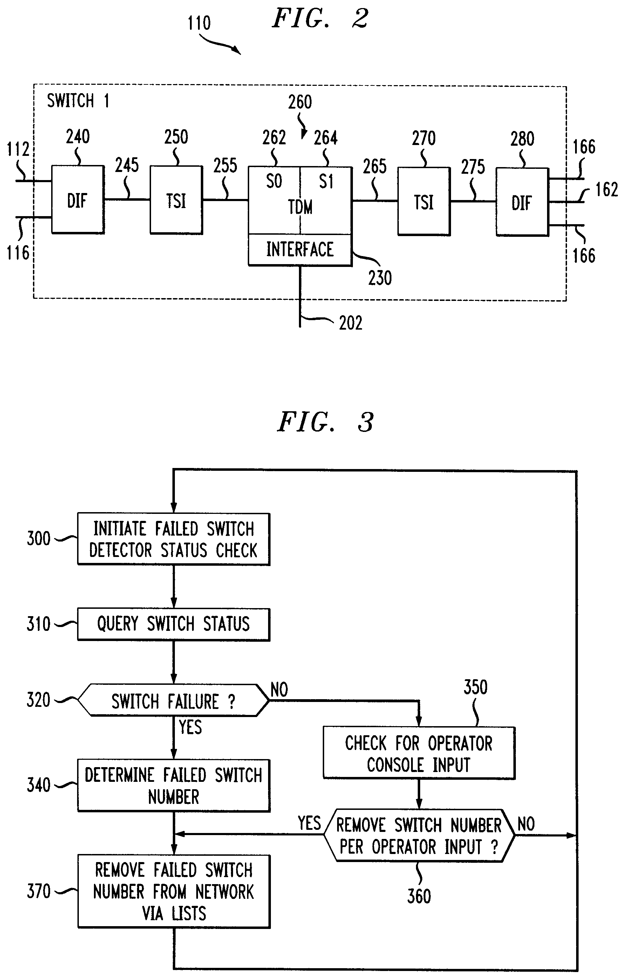

Referring now to Fig. 2, there is shown the configuration of a typical 4ESS switch 110. Again, 4ESS switch 110 is used by way of example and not by way of limitation as different communications switches may be used for different purposes. In network 100, referring back to Fig. 1, the 4ESS switches, 110-140 are assumed to be identical, each including a Digital Interface Frame (DIF) 240 having T1 or other trunk lines 112, 116 coupling LECs 114, 118, respectively, to 4ESS switch 110. Traffic from a LEC and destined for another or the same LEC coupled to a different 4ESS switch in the network 100 is coupled through DIF 240 over a trunk 245 having 120 circuits through a Time Slot Interface (TSI) 250, over another trunk 255 into Time Division Multiplex switch (TDM) 260. There, calls are switched or routed to the required output circuit which, depending on the traffic destination, may be coupled over trunk 265 through a second TSI trunk 270. TSI 270 is identical to TSI 250. The traffic is then coupled over a trunk 275 through a second DIF 280, identical to DIF 240, for output on T1 or other trunks 160, 162, 166, to the other 4ESS switches, 120, 130, 140, respectively, in network 100.

Traffic originating in a LEC and destined for another or the same LEC and coupled over another T1 trunk from the same 4ESS switch will be coupled through the DIF 240 and TSI 250 into the TDM 260 where the traffic will be switched to be coupled back through the TSI 250 and DIF 240, over the T1 trunk coupled to the destination LEC.

In operation, each 4ESS switch 110--140, monitors its traffic loading and automatically establishes an internal via list based on the traffic loading categories as above described. The via list maintained in each switch also receives traffic loading information from the other switches in the network for inclusion in its via list. As a 4ESS switch, 110 for example, prepares to transfer traffic across the network 100, it checks its via lists for the loading of all other 4ESS switches in the network 100 to find the switch having the lightest traffic loading, that is, the switch with the greatest number of available trunks from Lightly Loaded 1 through Heavy, coupling the traffic to that switch. If the switch is listed as Reserved, it is generally not available to receive traffic other than direct traffic originating or terminating in that switch. A switch listed in the Busy category is generally not available to receive any traffic.

Referring to Fig. 1, in those networks having a network management operating system or NEMOS 200, the via list of each 4ESS in the network 100 is coupled into the NEMOS 200 to provide a composite via list 220, which is identical to the via lists maintained in the switches 110-140. A NEMOS 200 may comprise a general purpose data processor well known in the art programmed as described herein and including memory. Each change in the switch 110-140 via lists is immediately coupled into memory of the NEMOS 200, updating the composite via list 220 stored in memory. An operations console 210 permits monitoring the traffic flow of the network 100, including each 4ESS switch 110-140 loading. The console 210 permits manual override capability of the traffic flows through the network, including the capability to remove a 4ESS switch, switch 110 for example, from the via list of the other switches in the network 100 so that no traffic from the remaining switches 120-140 is routed to switch 110 . There are a number of reasons for providing this capability, the chief reason being the failure of the switch.

Previously, when a switch had problems it would not communicate to the other switches in the network 100 that traffic was not being routed through the switch to the destination. Rather, the switch would dump or otherwise not route the message while at the same time giving an indication to the other network 100 switches that it was lightly loaded. This resulted in the other switches routing increased levels of traffic to the failing switch.

The causes of switch failure are varied. One common cause of failure is a problem with the TDM 260 which comprised, two switching controllers, side 0, 262, and side 1, 264, operating in tandem. Each controller 262, 264, is wired into quadrants, the quadrants being dictated by the connection interface with the incoming trunk lines 255, 265. If one quadrant fails, the controller, controller 262 for example, containing the failed quadrant is dropped from operation and switching is performed in the remaining controller 264. Other failures cause a controller, 262, 264 to reconfigure its switching capabilities in other switching configurations.

When such failures occur, the switch's capacity to move traffic is impaired. However, the via list, which is dependent on the number of trunk lines 160, 162, 166, 168, available, still shows that there is abundant capacity in the failing switch for receiving traffic.

Other problems such as a power loss to the switch, partial or complete destruction of the switch, caused by a catastrophe such as a fire or the like, also result in the above describe conditions where the switch can not handle traffic but the rest of the network 100 switches see that switch as having the most capacity to receive more traffic.

Where NEMOS 200 capability is available, an interface 230 is provided to couple switch 110-140 via list information over a link 202 to the composite via list 220 in the NEMOS. Traffic loading information as well as switch failure status developed in detectors 222, 224, 226, 228 of switches 110, 120, 130, 140, respectively, is provided to the composite via list 220. Additionally, the failing switch detector status developed in each switch is processed by the TDM switching controller to update the via list status and, when necessary , update the via lists of the network switches to remove a failing switch from the via lists.

Referring now to Fig. 3, a given TDM 260, initiates a failing switch detector status check at Step 300, making available the status information provided by the corresponding failing switch detectors 222, 224, 226, 228. Step 310 loads the status information for processing and Step 320 queries the status information to determine if a switch has failed. Upon detection of a switch failure, Step 340 determines the switch number and Step 370, acting upon the information developed in Step 340, initiates removal of the failing switch from the composite via list and the via lists maintained in each switch in the network.

The sequence is then reinitialized at Step 300 to again check the status of the information from the failing switch detectors 222, 224, 226, 228. Further, if no switch failure is detected in Step 320, the sequence is reinitialized at Step 300.

In those systems utilizing a network management operating system, NEMOS 200 failing switch detector 212 contains the information from the failing switch detectors in the network switches. NEMOS 200 performs a failing switch detection check using the sequence at Steps 300, 310, 320, 340, and 370, as above described. However, in the NEMOS 200, where no switch failure is detected at Step 320, the operator console 210 (Fig. 1) is queried at Step 350. Console 210 permits an operator to remove any switch 110-140 from the via lists of the NEMOS 200 and the switches 110-140 of network 100. This removal may be based on circumstances external to the switches 110-140 of network 100.

At Step 360, the console input is queried to ascertain if any switch is to be removed from the composite NEMOS and individual switch via lists. If so, Step 370 again removes the switch to be removed from the via lists and reinitializes to Step 300. If no switches are to be removed in Step 360, the process reinitializes to Step 300.

The present invention is directed to a method of routing traffic away from a failing switch having reduced capacity to handle such traffic. This involves removing the switch in trouble from the via lists maintained in all the switches in the network 100 and where a NEMOS 200 is available, from the composite via list so that no traffic is sent to the failing switch.

Each switch automatically monitors its own traffic status, updating its via list to reflect its capacity to accept additional traffic. Where a NEMOS 200 is available, the switch via list information is coupled into a composite via list maintained in the NEMOS 120. Assuming that a switch 110 begins to fail, reducing its capacity to handle traffic, either switch 110 or NEMOS 200 initiates a signal that updates all via lists in the network, including the composite via list in the NEMOS, by removing switch 110 from the via lists, preventing traffic from being sent to switch 110, where it would be delayed or lost and could overburden any capacity remaining in switch 110.

Additionally, where a NEMOS 200 is available, an operator, monitoring overall traffic flow through the network 100 will be able to manually remove traffic from any switch 110-140 in the network 100 by using the console 210 to remove the switch from all via lists in the network 100. This may be done for reasons external to the switches 110-140 such as equalizing the traffic loading across the network 100 or reserving a particular switch for anticipated traffic from LECs coupled to the switch 200.

Where some capacity remains such as when the switch category is at the Reserved Point or when the switch may be forced to operate using emergency power only, the switch may still be able to carry traffic that originates or terminates in a LEC coupled to the reduced capacity switch.

Assuming switch 110 is forced to operate using emergency power only, removal of switch 110 from other switches via lists would limit the traffic routed to switch 110 to traffic terminating in LECs 114, 118.

What has been described in relation to the drawings attached hereto is merely illustrative of the application of the principles of the present invention. While the above description has been generally directed to a communications network, it will be obvious to one skilled in the art that the principles may be extended to telecommunication, Internet, frame relay, packet data, ATM, or other networks for routing data from source to destination or for multi-casting. Other and further modifications can be made by those skilled in the art without departing from the spirit and scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of routing communications traffic away from one of a plurality of switches forming part of a communications network, comprising the steps of:
determining the capacity of each switch to handle communications traffic; and
removing any one of said plurality of switches from a respective via list maintained by each of said plurality of switches when said any one switch's capacity to carry traffic decreases below a predetermined capacity.

2. The method of claim 1, wherein said step of removing said any one switch from said respective via list maintained by each of said plurality of switches causes traffic to be routed around said any one switch.

3. The method of claim 2, wherein said capacity determining step includes:
developing a signal indicative of traffic carrying capacity for each of said plurality of switches;
transmitting said signal from said any one switch having its capacity to carry traffic decreasing below said predetermined capacity to the remaining of said plurality of switches; and
removing said any one switch from the respective via list of the remaining plurality of switches upon receipt of said signal, routing digital communications traffic away from said any one switch.

4. The method of claim 3, including the step of automatically transmitting said signal when said any one switch's capacity decreases below said predetermined capacity.

5. The method of claim 2, including the step of receiving and processing traffic originating or terminating in said any one switch.

6. A method of routing digital communications traffic away from one of a plurality of digital switches forming part of a digital communications network, comprising the steps of:
determining the capacity of each switch to handle digital communications traffic;
conveying said capacity to a network management operating system and storing same in a database therein;
monitoring said capacities stored in said database; and
removing any one of said plurality of digital switches from a respective via list maintained by each of said plurality of digital switches when said capacity stored in said database indicates said any one switch's capacity to carry traffic decreases below a predetermined capacity.

7. The method of claim 6, wherein said step of removing said any one switch from said respective via list maintained by each of said plurality of digital switches causes traffic to be routed around said any one switch.

8. The method of claim 7, wherein said capacity determining step includes:
developing a signal indicative of traffic carrying capacity for each of said plurality of digital switches;
storing said signal in said network management operating system database;
determining said signal indicative of said any one switch's capacity to carry traffic has decreased below said predetermined level and transmitting said signal from said database to said plurality of switching facilities; and
removing said any one switch from the respective via list of said plurality of digital switches upon receipt of said signal, routing digital communications traffic away from said any one switching facility.

9. The method of claim 8, including the step of automatically transmitting said signal when said any one switch's capacity decreases below said predetermined capacity.

10. The method of claim 7, including the step of permitting receiving and processing traffic originating or terminating in said any one switch after removing said one switch from said respective via lists.

11. Apparatus for routing digital communications traffic away from one of a plurality of digital switches forming part of a digital communications network comprising:
means for determining the capacity of each switch to handle digital communications traffic; and
means coupled to said determining means and operative for removing any one of said plurality of digital switches from a respective via list maintained by each of said plurality of digital switches when said any one switch's capacity to carry traffic decreases below a predetermined capacity.

12. The apparatus of claim 11, wherein said digital communications network is a frame relay network.

13. The apparatus of claim 11, wherein said digital communications network is a telecommunications network.

14. The apparatus of claim 11, wherein said digital communications network is an Internet network.

15. The apparatus of claim 11, wherein said digital communications network is a frame relay network.

16. The apparatus of claim 11, wherein said means for removing said any one switch from said respective via lists maintained by each of said plurality of digital switches is further operative to cause traffic to be routed around said any one switch.

17. The apparatus of claim 16, including signal generating means responsive to said determining means and operative to develop a signal indicative of traffic carrying capacity for each of said plurality of digital switches;
means for transmitting said signal from any one switch having its capacity to carry traffic decreasing below said predetermined capacity to the remaining of said plurality of digital switches; and
means responsive to said transmitted signal for removing said any one switch from the respective via lists of the remaining plurality of digital switches upon receipt of said signal.

18. The apparatus of claim 17 wherein said transmitting means is responsive to said decreased capacity to automatically transmit said signal from said any one switch.

19. The apparatus of claim 16, wherein said means for removing said any one switch from said respective via lists maintained by each of said plurality of digital switches is further operative to receive and process traffic originating or terminating in said any one switch.

20. Apparatus for routing digital communications traffic away from one of a plurality of digital switches forming part of a digital communications network, comprising:
means for determining the capacity of each switch to handle digital communications traffic;
means for storing said capacities in a database maintained in a network management operating system coupled to said digital switches; and
means coupled to said database and operative for removing any one of said plurality of digital switches from a respective via list maintained by each of said plurality of digital switches when said any one switch's capacity to carry traffic decreases below a predetermined capacity.

21. The apparatus of claim 20, wherein said means for removing said any one switch from said respective via lists maintained by each of said plurality of digital switches is further operative to cause traffic to be routed round said any one switch.

22. The apparatus of claim 21, including signal generating means responsive to said determining means and operative to develop a signal indicative of traffic carrying capacity for each of said plurality of digital switches;
means for transmitting said signals indicative of traffic carrying capacity for each of said plurality of digital switches to said network management operating system and storing same in said database; and
means responsive to said stored signals and operative for removing any one switch having its capacity to carry traffic decreasing below said predetermined capacity from the respective via lists of the remaining plurality of digital switches upon receipt of said signal.

23. The apparatus of claim 22 wherein said means responsive to said stored signals in said network management operating system database is operative to detect said decreased capacity and automatically removing said any one switch from the respective via lists of the remaining plurality of digital switches.

24. The apparatus of claim 21, wherein said means for removing said any one switch from said respective via lists maintained by each of said plurality of digital switches is further operative to permit said any one switch to receive and process traffic originating or terminating therein.
